# FASCICULE DE BREVET EUROPEEN

(11) **EP 3 601 050 B1**
(45) Date de publication et mention de la délivrance du brevet: **27.01.2021**
(21) Numéro de dépôt: 18714504.0
(22) Date de dépôt: 29.03.2018
(51) Int. Cl.: B64D 11/06

(54) **AMÉNAGEMENT DE SIÈGES INDIVIDUELS POUR PASSAGERS D'UN AVION**
ANORDNUNG AUS EINZELNEN SITZEN FÜR PASSAGIERE EINES FLUGZEUGS
ARRANGEMENT OF INDIVIDUAL SEATS FOR PASSENGERS OF AN AEROPLANE

(30) Priorité: 31.03.2017 FR 1752815
(43) Date de publication de la demande: 05.02.2020
(73) Titulaire: Safran Seats, 78370 Plaisir (FR)
(72) Inventeur: WHITE, Jeremy, Enfield, Middlesex EN1 2QW (GB); SANDHAM, Nicholas, London SW18 3BG (GB); SEALE, Richard, Leamington Spa, Warwickshire CV32 5BE (GB); CHRAIBI, Omar, London W8 6TQ (GB)
(74) Mandataire: Marconnet, Sébastien
(86) Numéro de dépôt international: PCT/EP2018/058100
(87) Numéro de publication internationale: WO 2018/178246

(56) Documents cités:
- FR-A1- 2 928 624
- FR-A1- 3 006 667
- GB-A- 2 438 162

## Description

La présente invention porte sur un aménagement de sièges individuels pour passagers d'un avion.

Les sièges d'avion de type "Classe Affaires" offrent aux passagers différentes positions de confort, de la position "assise" jusqu'à une position "allongée" dans laquelle le siège définit un plan de couchage sensiblement horizontal pour le passager.

Des positions intermédiaires de confort sont aussi proposées, telles que la position "relax" dans laquelle le dossier est fortement incliné. Généralement, ces positions sont obtenues par l'inclinaison du dossier, pivotant autour d'un axe horizontal et perpendiculaire à l'axe du siège. Le passager peut alors rester sur le siège lors de transitions entre les différentes positions.

Le lit est généralement constitué notamment du dossier, de l'assise, d'un repose-jambes et d'un repose-pieds, ces derniers pouvant être fixes ou liés à la cinématique du siège.

Certains agencement de sièges pour cabine d'avion de type "Classe Affaires" permettent un accès direct à une allée de circulation pour tous les passagers, via un passage disposé entre deux sièges agencés l'un derrière l'autre selon la direction longitudinale de l'avion. Les passagers peuvent ainsi sortir de leur siège facilement notamment lorsque le siège est en position "allongée" sans gêner d'autres passagers.

Dans certaines configurations, les sièges sont disposés suivant deux colonnes longitudinales et les sièges d'une même rangée présentent des axes inclinés, c'est-à-dire qu'ils forment un angle non nul, par rapport à l'axe longitudinal de l'arrangement.

Le document US2007246981 décrit une configuration en chevron dite de type "Herringbone" en anglais, dans laquelle les sièges d'une même rangée sont tournées vers l'intérieur en direction de l'axe longitudinal de l'arrangement, c'est-à-dire que leurs axes coupent l'axe longitudinal de l'avion à l'avant des sièges.

Dans la configuration décrite dans le document WO03/013903 dite de type "reverse Herringbone", les sièges d'une même rangée sont tournés vers l'extérieur de l'axe longitudinal, c'est-à-dire que les axes coupent l'axe longitudinal de l'avion à l'arrière des sièges. Les passagers sont ainsi orientés vers l'allée de circulation de la cabine. Le document GB2438162 décrit un siège passager d'aéronef comprenant un dossier et une assise. Le siège est entouré d'une coque. Le siège peut passer d'une position assise à une position sensiblement horizontale ou couchée. L'unité de siège comprend également une surface latérale et une surface d'extrémité se situant dans le prolongement d'une surface de lit du siège en position couchée.

L'invention vise à améliorer la modularité des configurations existantes en proposant un aménagement de sièges individuels destiné à être installé dans une cabine d'avion, ledit aménagement d'axe longitudinal comportant plusieurs ensembles de deux sièges disposés les uns derrière les autres, chaque siège présentant un axe,
- l'aménagement de siège comportant au moins un ensemble de deux sièges tournés vers l'intérieur en direction de l'axe longitudinal de l'aménagement, caractérisé en ce que:
- au moins un ensemble de sièges, dit ensemble d'extrémité, est disposé à une extrémité de l'aménagement,
- ledit ensemble d'extrémité comportant un premier siège et un deuxième siège, chaque siège étant convertible entre une position assise et une position allongée dans laquelle le siège définit une surface de lit, et
- un élément intermédiaire disposé entre le premier siège et le deuxième siège de l'ensemble d'extrémité,
- l'élément intermédiaire présentant une surface, dite surface intermédiaire, se situant dans le même plan que les surfaces de lit du premier siège et du deuxième siège, de sorte que les surfaces de lit du premier siège et du deuxième siège ainsi que la surface intermédiaire forment une surface de lit commune, la surface intermédiaire comblant au moins en partie un espace entre les surfaces de lit du premier siège et du deuxième siège.

Selon une réalisation, l'aménagement de sièges comporte en outre au moins un ensemble de deux sièges tournés vers l'extérieur à l'opposé de l'axe longitudinal de l'aménagement,

Selon une réalisation, l'élément intermédiaire est un siège d'appoint et en ce que la surface intermédiaire est définie par une assise du siège d'appoint.

Selon une réalisation, le siège d'appoint comporte en outre un dossier.

Selon une réalisation, l'élément intermédiaire est constitué par une console.

Selon une réalisation, la surface intermédiaire est définie par une surface de la console en position basse.

Selon une réalisation, l'élément intermédiaire est constitué par au moins un accoudoir escamotable entre une position haute et une position basse.

Selon une réalisation, la surface intermédiaire est définie par une surface de l'accoudoir en position basse.

Selon une réalisation, la surface intermédiaire est prolongée par un organe de maximisation de la surface de lit, notamment de forme triangulaire, comblant un espace restant entre les surfaces de lit du premier siège et du deuxième siège.

Selon une réalisation, ledit aménagement comporte un module muni d'une première zone de pieds associée au premier siège et d'une deuxième zone de pieds associée au deuxième siège, la première zone de pieds et la deuxième zone de pieds définissant une surface de pieds commune aux deux sièges.

Selon une réalisation, le module est muni d'une paroi de séparation escamotable disposée entre la première zone de pieds et la deuxième zone de pieds.

Selon une réalisation, le module est dépourvu de paroi de séparation entre la première zone de pieds et la deuxième zone de pieds.

Selon une réalisation, ledit aménagement comporte une paroi d'extrémité transversale par rapport à l'axe longitudinal de l'aménagement.

Selon une réalisation, la paroi d'extrémité transversale porte au moins un écran.

Selon une réalisation, deux parois obliques assurent une liaison respectivement entre une extrémité de la paroi transversale et une paroi s'étendant parallèlement par rapport à l'axe longitudinal de l'aménagement. Cela permet de réduire l'empreinte au sol de l'aménagement en début de couloir de circulation notamment. On peut alors disposer d'un dégagement entre les parois obliques et des meubles d'extrémité de la cabine.

Selon une réalisation, ledit aménagement comporte une cloison centrale escamotable s'étendant suivant l'axe longitudinal pour séparer entre eux les sièges de l'ensemble d'extrémité.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- Les figures 1a à 1d sont des vues en perspective illustrant un mode de réalisation d'un arrangement de sièges pouvant être utilisés dans un aménagement général selon l'invention;
- La figure 2 est une vue en perspective d'un module double pouvant être utilisé pour réaliser une pluralité d'arrangements de sièges selon la présente invention;
- Les figures 3a à 3c illustre différentes formes d'aménagements de sièges selon l'invention;
- Les figures 4a à 4c montrent une configuration d'un ensemble de deux sièges positionné à une extrémité d'un aménagement de sièges selon l'invention;
- Les figures 5a et 5b montrent une variante de configuration d'un ensemble de deux sièges positionné à une extrémité d'un aménagement de sièges selon l'invention;
- La figure 6 montre un mode de réalisation d'une zone de pieds commune à deux sièges disposés suivant une configuration en chevron.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

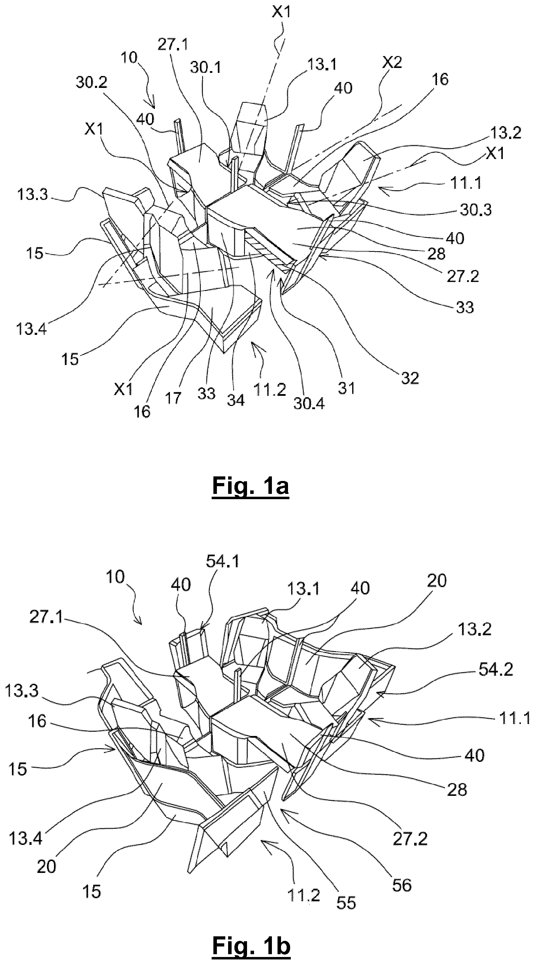

Les figures 1a à 1d montre un arrangement 10 de sièges individuels destiné à être installé dans une cabine d'avion. Cet arrangement 10 comporte un premier ensemble 11.1 de deux sièges 13.1, 13.2 et un deuxième ensemble 11.2 de deux sièges 13.3, 13.4. Dans chaque ensemble 11.1, 11.2, les sièges (13.1 et 13.2 pour l'ensemble 11.1, et 13.3 et 13.4 pour l'ensemble 11.2) sont situés côte à côte l'un de l'autre.

Chaque siège 13.1-13.4 présente un axe X1 correspondant à l'intersection entre un plan horizontal et un plan de symétrie du siège. Chaque siège 13.1-13.4 est de préférence convertible entre une position "assise" correspondant à la position utilisée notamment lors des phases d'arrêt, de décollage, et d'atterrissage de l'avion et une position "allongée" dans laquelle le siège 13.1-13.4 définit une surface de lit sensiblement horizontal pour le passager. Chaque siège 13.1-13.4 pourra également prendre des positions intermédiaire, dites positions relax, entre ces deux positions extrêmes.

L'arrangement 10 présente un axe longitudinal X2 qui pourra s'étendre suivant l'axe X3 de la cabine d'avion ou être parallèle à cet axe X3. En variante, l'axe X2 pourra être sensiblement perpendiculaire ou former un angle quelconque par rapport à l'axe X3 de la cabine. L'axe X2 longitudinal passe entre les sièges 13.1 et 13.2 (respectivement 13.3 et 13.4) d'un même ensemble 11.1 (respectivement 11.2). Cet axe X2 pourra se situer dans un plan de symétrie de l'arrangement 10.

Plus précisément, un premier siège 13.1 du premier ensemble 11.1 est positionné en face d'un premier siège 13.3 du deuxième ensemble 11.2 et un deuxième siège 13.2 du premier ensemble 11.1 est positionné en face d'un deuxième siège 13.4 du deuxième ensemble 11.2.

En outre, le premier siège 13.1 et le deuxième siège 13.2 du premier ensemble 11.1 sont tournés vers l'intérieur en direction de l'axe longitudinal X2 de l'arrangement 10. Le premier siège 13.3 et le deuxième siège 13.4 du deuxième ensemble 11.2 sont tournés vers l'extérieur à l'opposé de l'axe longitudinal X2 de l'arrangement 10.

De préférence, les axes X1 des sièges 13.1, 13.2, 13.3, 13.4 forment sensiblement le même angle par rapport à l'axe longitudinal X2 de l'arrangement 10. Les axes X1 des sièges d'un même ensemble 11.1, 11.2 coupent l'axe longitudinal X2 de l'arrangement 10 sensiblement en un même point.

Ainsi, les axes X1 des sièges 13.1, 13.2 du premier ensemble 11.1 coupent l'axe longitudinal X2 à l'avant des sièges 13.1, 13.2 sensiblement en un même point; tandis que les axes X1 des sièges 13.3, 13.4 du deuxième ensemble 11.2 coupent l'axe longitudinal X2 à l'arrière des sièges 13.3, 13.4 sensiblement en un même point.

Alternativement, les axes X1 des sièges d'un même ensemble 11.1, 11.2 pourront être décalés l'un par rapport à l'autre selon l'axe longitudinal X2, de sorte que les axes des sièges d'un même ensemble 11.1, 11.2 coupent l'axe longitudinal X2 en des points différents.

Chaque siège 13.1, 13.2, 13.3, 13.4 est intégré dans un logement correspondant d'un module de base 15. Ce module de base 15 comporte un accoudoir 16 situé d'un côté du siège 13.1-13.4 et un coussin 17 situé de l'autre côté du siège 13.1-13.4. Le coussin 17 est de préférence un coussin de maximisation du couchage destiné à être positionné dans le prolongement du plan de couchage du siège 13.1-13.4 lorsque ce dernier se trouve en position allongée. L'accoudoir 16 pourra être un accoudoir escamotable entre une position relevée permettant au passager de poser ses coudes lorsque le siège correspondant 13.1-13.4 est en position assise et une position abaissée dans laquelle l'accoudoir 16 se situe dans le prolongement du siège 13.1-13.4 en position allongée.

Chaque siège 13.1-13.4 est également associé à une coque 20, visible notamment en figure 1b, positionnée autour de son dossier afin d'isoler le siège 13.1-13.4 d'un arrangement 10 voisin. Les coques 20 des sièges 13.1 et 13.2 (respectivement 13.3 et 13.4) d'un même ensemble 11.1 (respectivement 11.2) pourront être réalisées d'un seul tenant.

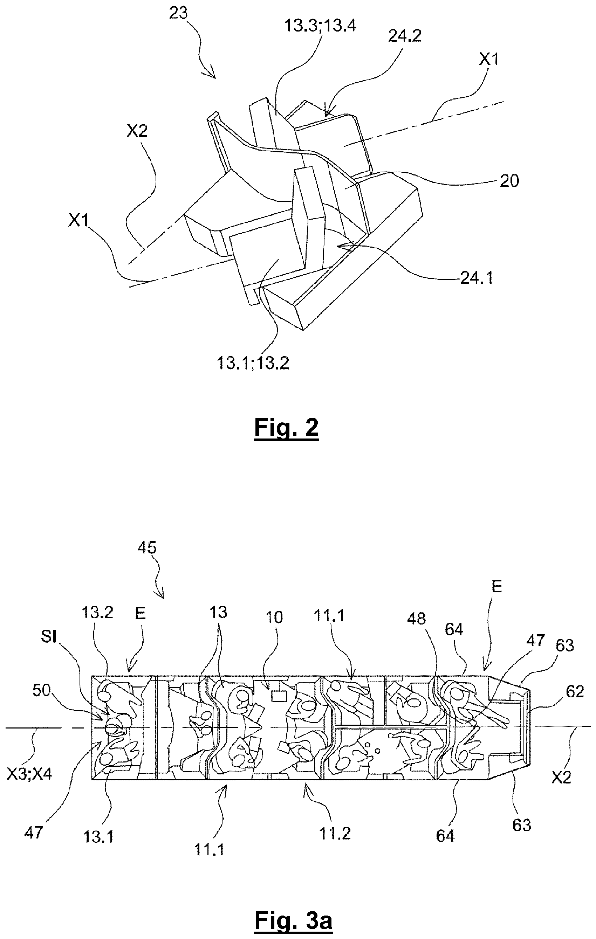

Dans le cas où plusieurs arrangements 10 sont positionnés les uns derrière les autres, le siège 13.1 (respectivement 13.2) du premier ensemble 11.1 et le siège 13.3 (respectivement 13.4) adjacent du deuxième ensemble 11.2 positionnés suivant la même colonne longitudinale pourront être obtenus à partir d'un module double 23. Comme cela est illustré sur la figure 2, le module double 23 comporte deux logements 24.1, 24.2 pour recevoir les siège 13.1 et 13.3 (respectivement 13.2 et 13.4) de telle façon que les sièges 13.1 et 13.3 (respectivement 13.2 et 13.4) sont tournés suivant deux directions opposées l'une par rapport à l'autre. Un des sièges 13.1 (respectivement 13.2) est tourné vers l'axe longitudinal X2, tandis que l'autre siège 13.3 (respectivement 13.4) est tourné vers l'extérieur de l'axe longitudinal X2. Les axes X1 des deux sièges 13.1 et 13.3 (respectivement 13.2 et 13.4) installés sur un même module 28 sont de préférence sensiblement parallèles l'un par rapport à l'autre. Une coque 20 s'étend entre les deux sièges 13.1 et 13.3 (respectivement 13.2 et 13.4) du module double 23. En outre, dans le module double 23, les dossiers des sièges 13.1 et 13.3 (respectivement 13.2 et 13.4) en position allongée se superposent au moins partiellement suivant la direction longitudinale Y.

Par ailleurs, l'arrangement 10 comporte une première console centrale 27.1 et une deuxième console centrale 27.2 positionnées entre le premier ensemble de sièges 11.1 et le deuxième ensemble de sièges 11.2. Les consoles centrales 27.1, 27.2 présentent chacune une face supérieure plane 28 sur laquelle le passager pourra notamment poser des objets.

La première console centrale 27.1 comporte une première zone de pieds 30.1 et une deuxième zone de pieds 30.2 ouvertes suivant deux directions opposées l'une par rapport à l'autre et associées respectivement au premier siège 13.1 du premier ensemble 11.1 et au premier siège 13.3 du deuxième ensemble 11.2. Ainsi, la zone de pieds 30.1 se situe dans le prolongement du premier siège 13.1 du premier ensemble 11.1 lorsque ce dernier se trouve en position allongée. La zone de pieds 30.2 opposée se situe dans le prolongement du premier siège 13.3 du deuxième ensemble 11.2 lorsque ce dernier se trouve en position allongée.

De façon analogue, la deuxième console centrale 27.2 comporte une première zone de pieds 30.3 et une deuxième zone de repose-pieds 30.4 ouvertes suivant deux directions opposées l'une par rapport à l'autre et associées respectivement au deuxième siège 13.2 du premier ensemble 11.1 et au deuxième siège 13.4 du deuxième ensemble 11.2. Ainsi, la zone de pieds 30.3 se situe dans le prolongement du deuxième siège 13.2 du premier ensemble 11.1 lorsque ce dernier se trouve en position allongée. La zone de pieds 30.4 opposée se situe dans le prolongement du deuxième siège 13.4 du deuxième ensemble 11.2 lorsque ce dernier se trouve en position allongée.

Dans chaque console centrale 27.1, 27.2, les zones de pieds 30.1 et 30.2 (respectivement 30.3 et 30.4) sont superposées au moins partiellement suivant l'axe longitudinal X2. Ainsi, il existe au moins une droite perpendiculaire à l'axe longitudinal X2 qui coupe les deux zones de pieds 30.1 et 30.2 (respectivement 30.3 et 30.4) d'une même console centrale 27.1 (respectivement 27.2). Plus précisément, les zones de pieds 30.1-30.4 sont constituées par des logements 31 ouverts en direction du siège 13.1-13.4 correspondant et un coussin 32 de repose-pieds sensiblement horizontal situé à l'intérieur du logement 31 et sur lequel le passager peut reposer ses pieds, tel que cela est montré sur la figure 1a.

Les logements 31 réalisés dans une console centrale 27.1, 27.2 sont délimités chacun par un fond 33, les fonds 33 des deux logements 31 ménagés dans une même consoles 27.1, 27.2 étant reliés entre eux par une paroi commune 34 inclinée par rapport à l'axe longitudinal X2.

Afin de présenter un caractère modulaire, les consoles centrales 27.1, 27.2 sont avantageusement indépendantes l'une de l'autre. En variante, les consoles 27.1, 27.2 pourront toutefois être réalisées de façon monobloc de manière à ne former qu'une seule pièce.

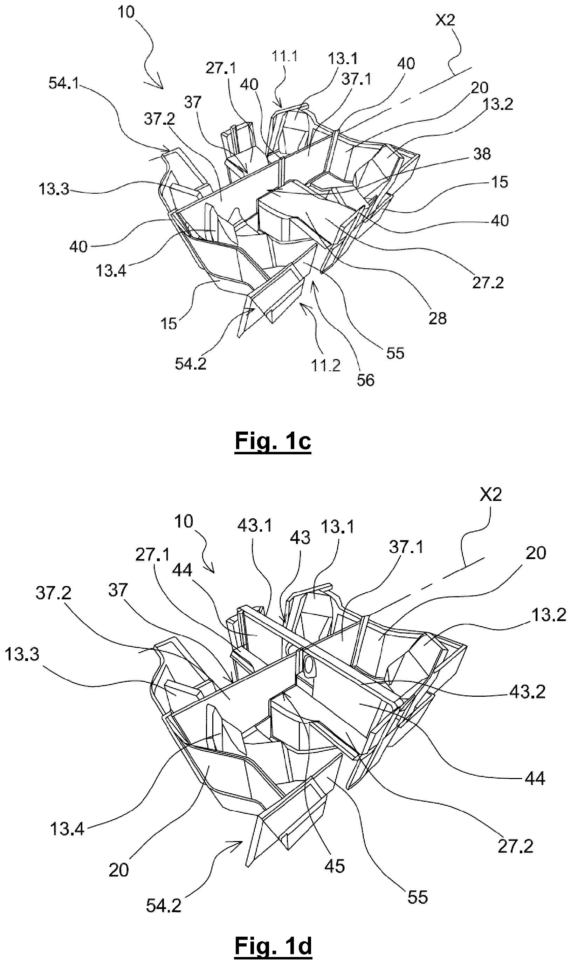

Par ailleurs, une cloison centrale 37 s'étend suivant l'axe longitudinal X2 pour séparer entre eux les sièges 13.1, 13.2 (respectivement 13.3 et 13.4) d'un même ensemble 11.1, 11.2. Comme cela est illustré par la figure 1c, une telle configuration permet de créer deux modules de sièges face à face, à savoir un premier module formé par les sièges 13.1 et 13.3, et un deuxième module formé par les sièges 13.2 et 13.4.

La cloison centrale 37 est avantageusement escamotable entre une position déployée et une position rangée. En position rangée, ladite cloison centrale 37 est logée au moins partiellement dans un espace 38 entre les deux consoles centrales 27.1, 27.2.

La cloison centrale 37 est réalisée en une seule ou en deux parties 37.1, 37.2 pour isoler indépendamment les sièges 13.1 et 13.2 (respectivement 13.3 et 13.4) côte à côte des deux ensembles de sièges 11.1, 11.2.

Dans un mode de réalisation particulier, la cloison centrale 37 est reliée mécaniquement à des mâts 40. En effet, l'arrangement 10 comportent des mâts 40 creux s'étendant verticalement pour autoriser le passage de faisceaux électriques acheminant notamment des signaux de puissance et de données pour des systèmes multimédia associés aux sièges 13.1-13.4. Il sera ainsi possible de tirer profit de la présence de ces mâts 40 pour les utiliser comme support de fixation de la cloison centrale 37 et des autres cloisons de l'arrangement 10 comme cela est expliqué ci-après.

A cet effet, les mâts 40 portant la cloison centrale 37 pourront comporter des glissières pour autoriser un déplacement de chaque partie 37.1, 37.2 de la cloison 37 suivant une direction verticale pour passer d'une position à l'autre. En variante, le déplacement de la cloison centrale 37 pourra être un déplacement latéral ou une rotation ou une combinaison de ces déplacements.

Par ailleurs, une cloison transversale 43 s'étend suivant une direction perpendiculaire à l'axe longitudinal X2 de l'arrangement 10 pour séparer entre eux les deux ensembles de sièges 11.1 et 11.2.

Dans le mode de réalisation de la figure 1d, la cloison transversale 43 porte des écrans 44 associés chacun à un siège 13.1-13.4 de l'arrangement 10. La cloison transversale 43 porte ainsi deux écrans 44 sur chacune de ses faces. Comme précédemment, les mâts 40 pourront servir de structure de support pour la cloison transversale 43. Dans certaines configurations, la cloison transversale 43 pourra comporter des formes pour recouvrir et masquer les mâts 40.

La cloison transversale 43 est de préférence réalisée en deux parties 43.1, 43.2 qui pourront être escamotables entre une position déployée et une position rangée.

Les figures 3a à 3c montrent des exemples d'aménagement 45 de sièges 13 selon l'invention destinés à être installé dans une cabine d'avion. L'aménagement 45 d'axe longitudinal X4 comporte plusieurs ensembles de deux sièges 11 disposés les uns derrière les autres suivant une colonne. L'aménagement de sièges 45 comporte au moins un ensemble de deux sièges 13.1, 13.2 tournés vers l'intérieur en direction de l'axe longitudinal X4 de l'aménagement 45, et de préférence, mais cela n'est pas obligatoire, au moins un ensemble de deux sièges 13.3, 13.4 tournés vers l'extérieur à l'opposé de l'axe longitudinal X4. L'axe X4 pourra être parallèle ou confondu avec l'axe X3 de la cabine d'avion.

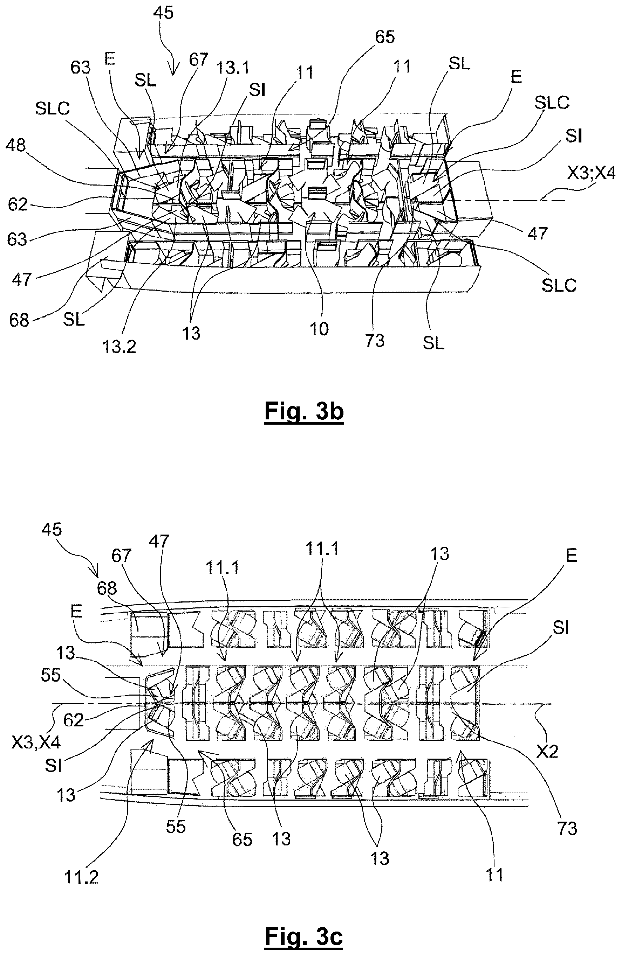

Ainsi, les aménagements 45 des figures 3a et 3b comportent quatre ensembles 11 de deux sièges 13 tournés vers l'intérieur de l'axe X4 et trois ensembles 11 de deux sièges 13 tournés vers l'extérieur de l'axe X4. L'aménagement 45 de la figure 3c comporte cinq ensembles 11 de deux sièges 13 tournés vers l'intérieur de l'axe X4 et deux ensembles 11 de deux sièges 13 tournés vers l'extérieur de l'axe X4.

Un aménagement 45 pourra avantageusement comporter au moins un arrangement 10 à quatre sièges 13 tel que décrit précédemment en référence aux figures 1a à 1d pour faciliter l'intégration de l'ensemble, mais cela n'est pas indispensable. L'axe de l'arrangement X2 est alors confondu avec l'axe X4 de l'aménagement 45.

L'aménagement 45 comporte deux ensembles de sièges E, dit ensembles d'extrémité E, disposés respectivement à une extrémité de l'aménagement 45. Un ensemble E de sièges d'extrémité comporte un premier siège 13 et un deuxième siège 13, chaque siège 13 étant convertible entre une position assise et une position allongée dans laquelle le siège définit une surface de lit SL.

Les sièges 13 de l'ensemble d'extrémité E pourront être tournés vers l'intérieur en direction de l'axe X4 (agencement en "chevron" ou "herringbone" en anglais analogue à celle des sièges 13.1 et 13.2 précédemment décrite), comme cela est le cas pour les ensembles d'extrémité E des figures 3a et 3b. Alternativement, les sièges de l'ensemble d'extrémité E pourront être tournés vers l'extérieur à l'opposé de l'axe X4 (agencement en "chevron inversé" ou "reverse herringbone" en anglais analogue à celle des sièges 13.3 et 13.4 précédemment décrite), comme cela est le cas pour l'ensemble d'extrémité E situé à gauche sur la figure 3c.

En outre, un élément intermédiaire 47 est disposé entre le premier siège 13.1 et le deuxième siège 13.2 (ou 13.3 et 13.4) d'au moins un ensemble d'extrémité E. L'élément intermédiaire 47 présente une surface, dite surface intermédiaire SI, se situant dans le même plan que les surfaces de lit SL du premier siège 13.1 et du deuxième siège 13.2, de sorte que les surfaces de lit SL des sièges 13.1, 13.2 ainsi que la surface intermédiaire SI forment une surface de lit commune SLC. La surface intermédiaire SI se situe dans le prolongement des surfaces de lit SL du premier et du deuxième siège et comble au moins en partie l'espace entre les surfaces de lit SL du premier siège 13.1 et du deuxième siège 13.2.

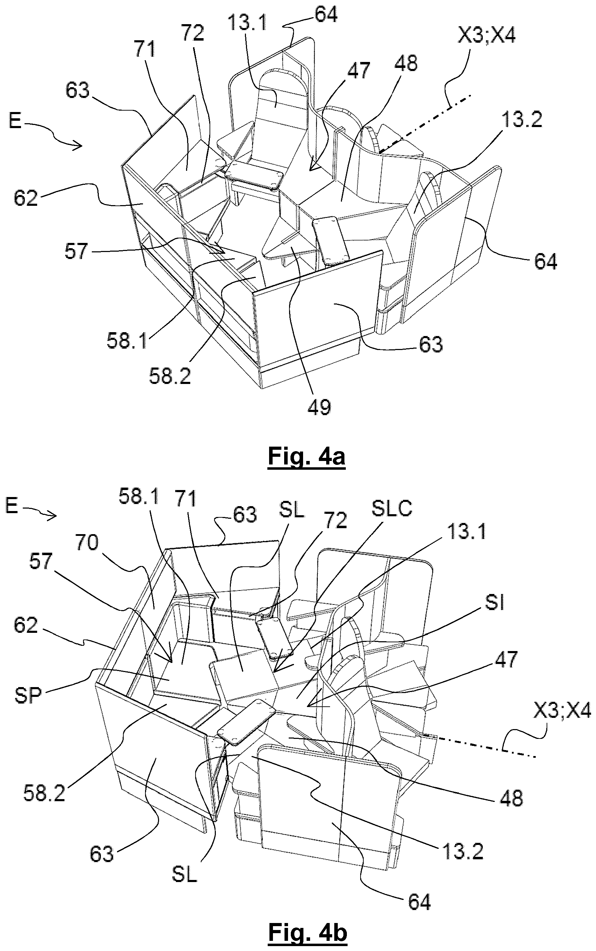

Dans le mode de réalisation des figures 4a à 4c, l'élément intermédiaire 47 est constitué par une console 48 disposée entre les deux sièges 13.1, 13.2 et escamotable entre une position haute dans laquelle la console 48 forme un accoudoir et une position basse dans laquelle la face supérieure de la console 48 constitue la surface intermédiaire SI se situant dans le même plan que les deux sièges 13.1, 13.2 en position allongée pour combler au moins en partie l'espace entre les deux sièges 13.1, 13.2.

La console 48 présente à cet effet une forme en triangle ou en trapèze compte tenu de l'inclinaison des sièges 13.1 et 13.2. La console 48 pourra le cas échéant être associée à une extrémité fixe 49 de forme triangulaire.

Alternativement, on pourra utiliser une console 48 fixe ayant une face supérieure définissant la surface intermédiaire SI située dans le même plan que les surfaces de lit SL des sièges 13.

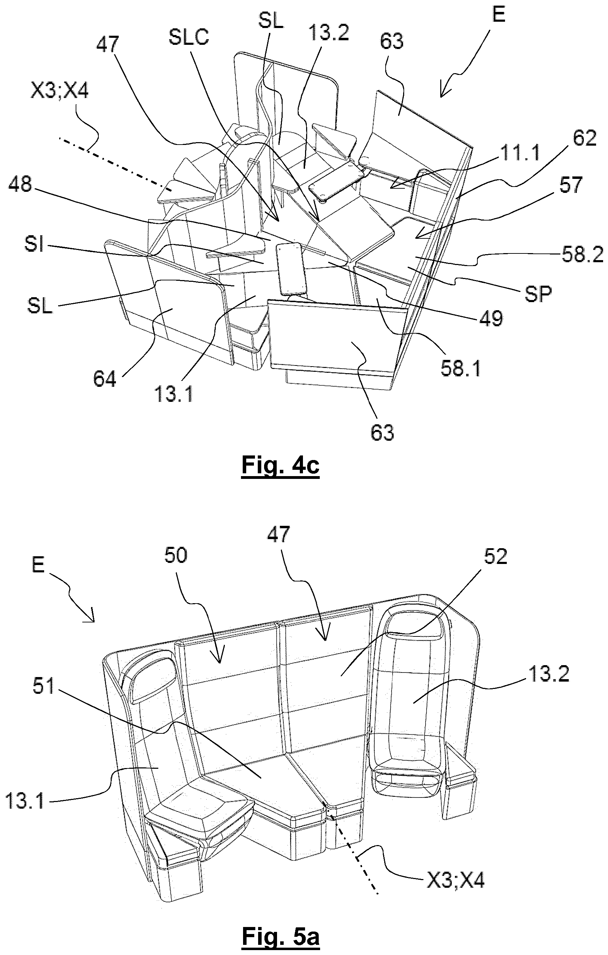

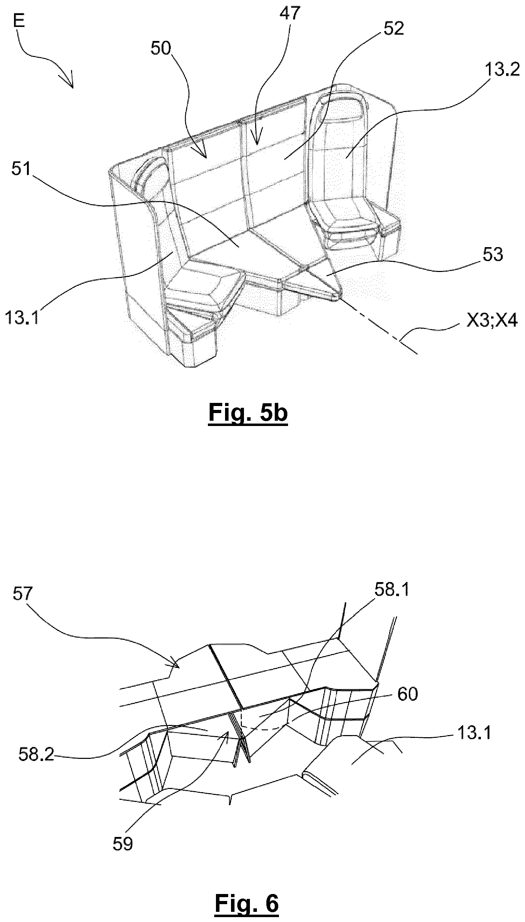

Dans le mode de réalisation des figures 5a et 5b, l'élément intermédiaire 47 est un siège d'appoint 50 disposé entre les deux sièges 13.

La surface intermédiaire SI est définie par l'assise 51 du siège d'appoint 50 qui se situe dans le même plan que les surfaces de lit SL des sièges 13.1, 13.2 de manière à former la surface lit SL commune aux deux sièges 13.1, 13.2. Ce siège d'appoint 50 comporte en outre un dossier 52. Contrairement aux sièges 13, le siège d'appoint 50 est non convertible. Il pourra être utilisé par un passager dans les moments où il est possible de se détacher pour circuler librement dans l'avion (hors phase de décollage ou d'atterrissage).

La surface intermédiaire SI définie par l'assise 51 est prolongée par un organe 53 de maximisation de la surface de lit SL de forme triangulaire comblant un espace restant entre l'assise 51 du siège d'appoint 50 et les surfaces de lit SL du premier et du deuxième siège. L'organe 53 de maximisation est constitué par exemple par un coussin, ici de forme triangulaire, pouvant être escamotable entre une position rétractée et une position déployée.

L'assise 51 et le dossier 52 pourront être réalisés chacun de façon monobloc ou être réalisé à partir de deux demi-coussins associés chacun à un siège 13.1, 13.2 et positionnés côte à côte.

Le siège d'appoint 50 pourra comporter un système d'ancrage pour siège bébé.

Il sera également possible d'installer un siège d'appoint 50 dépourvu du coussin de dossier 52.

Dans le mode de réalisation de la figure 3c, l'élément intermédiaire 47 est constitué par au moins un accoudoir 55 disposé entre les sièges 13.3, 13.4 d'extrémité gauche disposé suivant une configuration de chevron inversée. Cet accoudoir 55 est escamotable entre une position haute utilisable par le passager en position assis et une position basse. La surface intermédiaire SI est définie par une surface de l'accoudoir 55 en position basse. En l'occurrence, on prévoit un accoudoir 55 par siège, mais il est possible de prévoir un accoudoir 55 unique pour les deux sièges 13.3, 13.4.

Par ailleurs, comme cela est visible sur les figures 4b, 4b, 4c, et 6, l'ensemble d'extrémité E comporte un module 57 muni d'une première zone de pieds 58.1 associée au premier siège 13.1 et d'une deuxième zone de pieds 58.2 associée au deuxième siège 13.2. La première zone de pieds 58.1 et la deuxième zone de pieds 58.2 définissent une surface de pieds SP commune aux deux sièges 13.1, 13.2, c'est-à-dire sans paroi de séparation entre ces deux zones de pied 58.1, 58.2. Cette surface de pieds SP commune est disposée dans le même plan que les surfaces de lit SL des sièges 13.1, 13.2. Les zones de pieds 58.1, 58.2 pourront être constituées par un coussin, notamment réalisé en mousse.

Les zones de pieds 58.1, 58.2 pourront être ouvertes, comme cela est le cas dans le mode de réalisation des figures 4a, 4b, 4c ou disposée à l'intérieur d'un logement 59 ménagé dans le module 57 ouvert en direction des sièges 13.1, 13.2, tel que cela est illustré par la figure 6.

Suivant un mode de réalisation, le module 57 pourra être muni d'une paroi de séparation escamotable 60 entre la première zone de pieds 58.1 et la deuxième zone de pieds 58.2. La paroi de séparation 60 est escamotable entre une position de séparation dans laquelle la paroi 60 assure la séparation entre les deux zones de pieds 58.1, 58.2 et une position stockée dans laquelle les deux zones de pieds 58.1, 58.2 sont en communication l'une avec l'autre. Autrement dit, les deux zones de pieds 58.1, 58.2 et le logement 59 délimitent un volume unique lorsque la paroi de séparation 60 est en position stockée.

Dans le mode de réalisation des figures 3a-3c, et 4a à 4c, au moins un ensemble d'extrémité E est disposé dans un espace délimité par une paroi d'extrémité 62 transversale par rapport à l'axe longitudinal X4 de l'aménagement 45 ainsi que deux parois obliques 63 assurant une liaison respectivement entre une extrémité de la paroi transversale 62 et une paroi 64 s'étendant sensiblement parallèlement par rapport à l'axe longitudinal X4 de l'aménagement 45. Par "paroi oblique", on entend des parois 63 formant un angle non nul par rapport à l'axe longitudinal X4. Ces parois obliques 63 sont inclinées vers l'intérieur de l'espace occupé par l'ensemble d'extrémité E. L'assemblage des parois 62, 63 et 64 présente ainsi une forme biseauté à une des extrémités de l'aménagement 45.

Comme on peut le voir sur les figures 3a et 3c, cela permet de réduire l'empreinte au sol de l'aménagement 45 en début de couloir de circulation 65 notamment. On peut alors disposer d'un dégagement 67 important entre les parois obliques 63 et des meubles d'extrémité 68 de la cabine.

La paroi d'extrémité transversale 62 pourra porter un écran commun 70 aux deux sièges 13.1, 13.2 tel que montré sur la figure 4b. En variante, la paroi d'extrémité 62 porte deux écrans 70, soit un écran 70 pour chaque passager.

Les parois obliques 63 pourront porter des meubles de rangement latéraux 71. Un meuble de rangement latéral 71 pourra présenter des dimensions suffisantes pour contenir le bagage d'un passager. Un meuble de rangement latéral 71 pourra comporter un logement de tablette 72.

On pourra prévoir une cloison centrale escamotable 73 s'étendant suivant l'axe longitudinal X4 pour séparer entre eux les sièges 13 d'un ensemble d'extrémité E, tel que montré sur la figure 3b. Cette cloison 73 est mobile entre une position haute assurant la séparation entre les deux sièges 13 et une position basse permettant la mise en commun des surfaces de lit SL notamment.

L'invention pourra également être mise en œuvre avec des sièges installés dans d'autres moyens de transport, comme par exemple des sièges de bus, de trains, ou de bateaux.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Aménagement (45) de sièges individuels destiné à être installé dans une cabine d'avion, ledit aménagement (45) d'axe longitudinal (X4) comportant plusieurs ensembles de deux sièges disposés les uns derrière les autres, chaque siège (13) présentant un axe (X1),
- l'aménagement (45) de sièges comportant au moins un ensemble de deux sièges (13.1, 13.2) tournés vers l'intérieur en direction de l'axe longitudinal (X4) de l'aménagement (45),
- au moins un ensemble de sièges, dit ensemble d'extrémité (E), est disposé à une extrémité de l'aménagement (45),
- ledit ensemble d'extrémité (E) comportant un premier siège (13.1) et un deuxième siège (13.2), chaque siège (13) étant convertible entre une position assise et une position allongée dans laquelle le siège (13) définit une surface de lit (SL),
- un élément intermédiaire (47) étant disposé entre le premier siège (13.1) et le deuxième siège (13.2) de l'ensemble d'extrémité (E),
- l'élément intermédiaire (47) présentant une surface, dite surface intermédiaire (SI), se situant dans le même plan que les surfaces de lit (SL) du premier siège (13.1) et du deuxième siège (13.2), **caractérisé en ce que** les surfaces de lit (SL) du premier siège (13.1) et du deuxième siège (13.2) ainsi que la surface intermédiaire (SI) forment une surface de lit commune (SLC), la surface intermédiaire (SI) comblant au moins en partie un espace entre les surfaces de lit (SL) du premier siège (13.1) et du deuxième siège (13.2).

2. Aménagement selon la revendication 1, **caractérisé en ce qu'**il comporte en outre au moins un ensemble de deux sièges (13.3, 13.4) tournés vers l'extérieur à l'opposé de l'axe longitudinal (X4) de l'aménagement (45).

3. Aménagement selon la revendication 1 ou 2, **caractérisé en ce que** l'élément intermédiaire (47) est un siège d'appoint (50) et **en ce que** la surface intermédiaire (SI) est définie par une assise (51) du siège d'appoint (50).

4. Aménagement selon la revendication 3, **caractérisé en ce que** le siège d'appoint (50) comporte en outre un dossier (52).

5. Aménagement selon la revendication 1 ou 2, **caractérisé en ce que** l'élément intermédiaire (47) est constitué par une console (48).

6. Aménagement selon la revendication 5, **caractérisé en ce que** la surface intermédiaire (SI) est définie par une surface de la console (48) en position basse.

7. Aménagement selon la revendication 1 ou 2, **caractérisé en ce que** l'élément intermédiaire (47) est constitué par au moins un accoudoir (55) escamotable entre une position haute et une position basse.

8. Aménagement selon la revendication 7, **caractérisé en ce que** la surface intermédiaire (SI) est définie par une surface de l'accoudoir (55) en position basse.

9. Aménagement selon l'une quelconque des revendications 1 à 8, **caractérisé en ce que** la surface intermédiaire (SI) est prolongée par un organe (53) de maximisation de la surface de lit (SL), notamment de forme triangulaire, comblant un espace restant entre les surfaces de lit (SL) du premier siège (13.1) et du deuxième siège (13.2).

10. Aménagement selon l'une quelconque des revendications 1 à 9, **caractérisé en ce qu'**il comporte un module (57) muni d'une première zone de pieds (58.1) associée au premier siège (13.1) et d'une deuxième zone de pieds (58.2) associée au deuxième siège (13.2), la première zone de pieds (58.1) et la deuxième zone de pieds (58.2) définissant une surface de pieds (SP) commune aux deux sièges (13.1, 13.2).

11. Aménagement selon la revendication 10, **caractérisé en ce que** le module (57) est muni d'une paroi de séparation escamotable (60) disposée entre la première zone de pieds (58.1) et la deuxième zone de pieds (58.2).

12. Aménagement selon la revendication 11, **caractérisé en ce que** le module (57) est dépourvu de paroi de séparation (60) entre la première zone de pieds (58.1) et la deuxième zone de pieds (58.2).

13. Aménagement selon l'une quelconque des revendications 1 à 12, **caractérisé en ce qu'**il comporte une paroi d'extrémité (62) transversale par rapport à l'axe longitudinal (X4) de l'aménagement (45).

14. Aménagement selon la revendication 13, **caractérisé en ce que** deux parois obliques (63) assurent une liaison respectivement entre une extrémité de la paroi transversale (62) et une paroi (64) s'étendant parallèlement par rapport à l'axe longitudinal (X4) de l'aménagement (45).

15. Aménagement selon l'une quelconque des revendications 1 à 14, **caractérisé en ce qu'**il comporte une cloison centrale escamotable (73) s'étendant suivant l'axe longitudinal (X4) pour séparer entre eux les sièges (13) de l'ensemble d'extrémité (E).

## Patentansprüche

1. Anordnung (45) einzelner Sitze, die in einer Flugzeugkabine installiert werden sollen, wobei die Anordnung (45) mit einer Längsachse (X4) mehrere Einheiten von zwei hintereinander angeordneten Sitzen umfasst, wobei jeder Sitz (13) eine Achse aufweist (X1), wobei
- die Anordnung (45) von Sitzen mindestens eine Einheit von zwei, nach innen in Richtung der Längsachse (X4) der Anordnung (45) zugewandten Sitzen (13.1, 13.2) umfasst;
- mindestens ein Sitzeinheit, sogenannter Endeinheit (E), an einem Ende der Anordnung (45) angeordnet ist,
- der Endeinheit (E) einen ersten Sitz (13.1) und einen zweiten Sitz (13.2) umfasst, wobei jeder Sitz (13) zwischen einer Sitzposition und einer Liegeposition, in der der Sitz (13) eine Bettfläche definiert (SL), umwandelbar ist,
- ein Zwischenelement (47) zwischen dem ersten Sitz (13.1) und dem zweiten Sitz (13.2) der Endeinheit (E) angeordnet ist,
- das Zwischenelement (47) eine Fläche aufweist, sogenannte Zwischenfläche (SI), in derselben Ebene wie die Bettflächen (SL) des ersten Sitzes (13.1) und des zweiten Sitzes (13.2),
**dadurch gekennzeichnet**
die Bettflächen (SL) des ersten Sitzes (13.1) und des zweiten Sitzes (13.2) sowie die Zwischenfläche (SI) eine gemeinsame Bettfläche (SLC) bilden, wobei die Zwischenfläche (SI) zumindest teilweise einen Raum zwischen den Bettflächen (SL) des ersten Sitzes (13.1) und des zweiten Sitzes (13.2) ausfüllt.

2. Anordnung nach Anspruch 1, **dadurch gekennzeichnet, dass** sie ferner mindestens eine Einheit von zwei Sitzen (13.3, 13.4) umfasst, die der Längsachse (X4) der Anordnung (45) nach außen abgewandt sind.

3. Anordnung nach Anspruch 1 oder 2, **dadurch gekennzeichnet, dass** das Zwischenelement (47) ein zusätzlicher Sitz (50) ist, und dass die Zwischenfläche (SI) durch eine Sitzfläche (51) des zusätzlichen Sitzes (50) definiert ist.

4. Anordnung nach Anspruch 3, **dadurch gekennzeichnet, dass** der zusätzliche Sitz (50) ferner eine Rückenlehne (52) umfasst.

5. Anordnung nach Anspruch 1 oder 2, **dadurch gekennzeichnet, dass** das Zwischenelement (47) aus einer Konsole (48) besteht ist.

6. Anordnung nach Anspruch 5, **dadurch gekennzeichnet, dass** die Zwischenfläche (SI) durch eine Fläche der Konsole (48) in einer niedrigen Position definiert ist.

7. Anordnung nach Anspruch 1 oder 2, **dadurch gekennzeichnet, dass** das Zwischenelement (47) aus mindestens eines Armlehne (55) besteht ist, die zwischen einer hohen Position und einer niedrigen Position einziehbar ist.

8. Anordnung nach Anspruch 7, **dadurch gekennzeichnet, dass** die Zwischenfläche (SI) durch eine Fläche der Armlehne (55) in der niedrigen Position definiert ist.

9. Anordnung nach einem der Ansprüche 1 bis 8, **gekennzeichnet dadurch, dass** die Zwischenfläche (SI) um ein Maximierungsorgan (53) für die Bettfläche (SL), insbesondere mit einer dreieckigen Form, verlängert ist, welches einen zwischen den Bettflächen (SL) des ersten Sitzes (13.1) und des zweiten Sitzes (13.2) verbleibenden Raum ausfüllt.

10. Anordnung nach einem der Ansprüche 1 bis 9, **dadurch gekennzeichnet, dass** sie ein Modul (57) umfasst, das mit einem ersten, dem ersten Sitz (13.1) zugeordneten Fußbereich (58.1) und einem zweiten, mit dem zweiten Sitz (13.2) zugeordneten Fußbereich (58.2) versehen ist, wobei der erste Fußbereich (58.1) und der zweite Fußbereich (58.2) eine den beiden Sitzen (13.1, 13.2) gemeinsame Fußfläche (SP) definieren.

11. Anordnung nach Anspruch 10, **dadurch gekennzeichnet, dass** das Modul (57) mit einer einziehbaren Trennwand (60) versehen ist, die zwischen dem ersten Fußbereich (58.1) und dem zweiten Fußbereich (58.2) angeordnet ist.

12. Anordnung nach Anspruch 11, **dadurch gekennzeichnet, dass** das Modul (57) keine Trennwand (60) zwischen dem ersten Fußbereich (58.1) und dem zweiten Fußbereich (58.2) aufweist.

13. Anordnung nach einem der Ansprüche 1 bis 12, **dadurch gekennzeichnet, dass** sie eine zur Längsachse (X4) der Anordnung (45) quer verlaufende Stirnwand (62) aufweist.

14. Anordnung nach Anspruch 13, **dadurch gekennzeichnet, dass** zwei schräge Wände (63) jeweils eine Verbindung zwischen einem Ende der Querwand (62) und einer sich parallel zur Längsachse (X4) der Anordnung (45) erstreckenden Wand (64) herstellen.

15. Anordnung nach einem der Ansprüche 1 bis 14, **gekennzeichnet dadurch, dass** sie eine einziehbare zentrale Trennwand (73) umfasst, die sich entlang der Längsachse (X4) erstreckt, um die Sitze (13) der Endeinheit (E) zu voneinander trennen.

## Claims

1. An arrangement (45) of individual seats to be installed in an aircraft cabin, wherein said arrangement (45) having a longitudinal axis (X4) comprises several assemblies of two seats arranged behind one another, each seat (13) having an axis (X1), wherein
- the arrangement (45) of seats comprising at least one assembly of two seats (13.1, 13.2) facing inwards in the direction of the longitudinal axis (X4) of the arrangement (45),
- at least one assembly of seats, so-called end assembly (E), is arranged at one end of the arrangement (45),
- said end assembly (E) comprises a first seat (13.1) and a second seat (13.2), wherein each seat (13) is convertible between a seating position and a lying position in which the seat (13) defines a bed surface (SL),
- an intermediate element (47) is arranged between the first seat (13.1) and the second seat (13.2) of the end assembly (E),
- the intermediate element (47) has a surface, so-called intermediate surface (SI), in the same plane as the bed surfaces (SL) of the first seat (13.1) and second seat (13.2),
**characterized in that**
the bed surfaces (SL) of the first seat (13.1) and second seat (13.2) as well as intermediate surface (SI) form a common bed surface (SLC), wherein the intermediate surface (SI) at least partly fills a space between the bed surfaces (SL) of the first seat (13.1) and second seat (13.2).

2. The arrangement according to claim 1, **characterized in that** it further comprises at least one assembly of two seats (13.3, 13.4) facing outwardly opposite the longitudinal axis (X4) of the arrangement (45).

3. The arrangement according to claim 1 or 2, **characterized in that** the intermediate element (47) is an extra seat (50) and **in that** the intermediate surface (SI) is defined by a seating surface (51) of the extra seat (50).

4. The arrangement according to claim 3, **characterized in that** the extra seat (50) further comprises a backrest (52).

5. The arrangement according to claim 1 or 2, **characterized in that** the intermediate element (47) is formed by a console (48) .

6. The arrangement according to claim 5, **characterized in that** the intermediate surface (SI) is defined by a surface of the console (48) in a low position.

7. The arrangement according to claim 1 or 2, **characterized in that** the intermediate element (47) is formed by at least one armrest (55) retractable between a high position and a low position.

8. The arrangement according to claim 7, **characterized in that** the intermediate surface (SI) is defined by a surface of the armrest (55) in the low position.

9. The arrangement according to any one of the claims 1 to 8, **characterized in that** the intermediate surface (SI) is extended by a member (53) for maximizing the bed surface (SL), in particular of triangular shape, which fills a space remaining between the bed surfaces (SL) of the first seat (13.1) and second seat (13.2).

10. The arrangement according to any one of claims 1 to 9, **characterized in that** it comprises a module (57) provided with a first foot zone (58.1) associated with the first seat (13.1) and a second foot zone (58.2) associated with the second seat (13.2), wherein the first foot zone (58.1) and second foot zone (58.2) defines a foot surface (SP) common to the two seats (13.1, 13.2).

11. The arrangement according to claim 10, **characterized in that** the module (57) is provided with a retractable separating wall (60) disposed between the first foot zone (58.1) and second foot zone (58.2).

12. The arrangement according to claim 11, **characterized in that** the module (57) has no separating wall (60) between the first foot zone (58.1) and second foot zone (58.2).

13. The arrangement according to any one of the claims 1 to 12, **characterized in that** it comprises an end wall (62) transversal to the longitudinal axis (X4) of the arrangement (45) .

14. The arrangement according to claim 13, **characterized in that** two oblique walls (63) provide a connection respectively between one end of the transverse wall (62) and a wall (64) extending parallel to the longitudinal axis (X4) of the arrangement (45).

15. The arrangement according to any one of the claims 1 to 14, **characterized in that** it comprises a retractable central partition (73) extending along the longitudinal axis (X4) so as to separate the seats (13) of the end assembly (E) from one another.
